# EUROPÄISCHE PATENTSCHRIFT

(11) **EP 3 004 473 B1**
(45) Veröffentlichungstag und Bekanntmachung des Hinweises auf die Patenterteilung: **13.05.2020**
(21) Anmeldenummer: 14724487.5
(22) Anmeldetag: 19.05.2014
(51) Int. Cl.: E03C 1/04, E03C 1/05, F16K 11/078

(54) **SANITÄRARMATUR MIT EINER STEUERKARTUSCHE**
SANITARY FITTING WITH A CONTROL CARTRIDGE
ROBINETTERIE SANITAIRE AVEC CARTOUCHE DE COMMANDE

(30) Priorität: 03.06.2013 CH 10482013
(43) Veröffentlichungstag der Anmeldung: 13.04.2016
(73) Patentinhaber: Oblamatik AG, 7000 Chur (CH)
(72) Erfinder: LANG, Edo, CH-7000 Chur (CH); OBRIST, Roland, CH-7412 Scharans (CH)
(74) Vertreter: OK pat AG
(86) Internationale Anmeldenummer: PCT/EP2014/060224
(87) Internationale Veröffentlichungsnummer: WO 2014/195120

(56) Entgegenhaltungen:
- EP-A1- 0 541 468
- EP-A1- 2 218 840
- EP-A2- 0 446 953
- EP-A2- 1 700 957
- DE-A1-102005 061 031

## Beschreibung

Die Erfindung betrifft eine Sanitärarmatur mit einer in ein Kartuschengehäuse der Sanitärarmatur eingebauten Steuerkartusche. Dabei umfasst die Steuerkartusche eine erste Zuführöffnung und eine Auslauföffnung sowie eine oder mehrere Dichtungen. Diese Dichtungen sind zum dichtenden Anliegen an eine Innenoberfläche des Kartuschengehäuses ausgebildet und so angeordnet, dass nach erfolgtem Einbau der Steuerkartusche in das Kartuschengehäuse der Sanitärarmatur die erste Zuführöffnung dichtend an einen Kaltwasser- oder Mischwasser-Anschluss der Sanitärarmatur und die Auslauföffnung dichtend an eine Auslaufleitung der Sanitärarmatur anschliesst. Des Weiteren betrifft die vorliegende Erfindung insbesondere eine elektronische Sanitärarmatur mit einer derartigen Steuerkartusche.

Sanitärarmaturen zum Steuern des Wasserzulaufs zu einer Sanitärapparatur und al lenfalls zum Verändern der Wassertemperatur sind aus dem Stand der Technik bekannt. Mischbatterien oder Mischarmaturen zum Vermischen von kaltem und warmem Wasser sind ebenfalls bekannt.

Ältere Mischbatterien umfassen einen Kaltwasseranschluss und einen Warmwasseranschluss, die je mit einem separaten Dosierventil mit Drehgriff ausgerüstet sind und die in einen gemeinsamen Auslass oder Hahn münden. Durch eine manuelle Einstellung der Kombination von geeigneten Öffnungszuständen der beiden Dosierventile ergibt sich eine gewünschte Wassertemperatur und ein gewünschter Wasserfluss. Die Dichtungen der Dosierventile sind anfällig auf Beschädigung und auf Temperaturunterschiede. Zudem neigen die Ventile dieser üblicherweise Kupfer- oder Messingbauteile umfassenden Mischarmaturen zum Blockieren und müssen gelegentlich ersetzt werden.

Modernere Mischarmaturen sind als Einhebelmischer ausgebildet, deren funktionaler Kern eine sogenannte Kartusche ist. In einer solchen Kartusche befinden sich zwei absolut plane Keramikscheiben, die gegeneinander verschoben und/oder verdreht werden können. An drei Löchern in einer ersten als Ventilsitz dienenden, feststehenden Keramikscheibe sind üblicherweise Kaltzulauf und Warmzulauf sowie der Auslauf der Armatur angeschlossen. Ein drehbarer und schwenkbarer Hebel wirkt über Lager auf die zweite (bewegliche) Keramikscheibe, in die ein Kanal eingearbeitet ist, der je nach Stellung der beweglichen Keramikscheibe keine, zwei oder alle drei Kanäle der feststehenden Keramikscheibe mehr oder weniger verbindet. Da die Betätigungswege bei derartigen Einhand-Mischbatterien sehr kurz sind und damit die Armatur sehr schnell absperrbar ist, entstehen beim plötzlichen Schliessen häufig Druckstösse, die zu einer hohen Druckbelastung des Rohrnetzes und zu Schallbelästigungen führen. Grosse Anstrengungen wurden unternommen, um diese Nachteile der Einhebelmischer zumindest teilweise zu beheben. Ein derartiger Einhebelmischer ist beispielsweise aus dem Dokument EP 2 354 608 A1 bekannt. Allerdings wird dort zusätzlich auf eine Rastcharakteristik Wert gelegt, die das Wasser sparende Bedienen des Einhebelmischers ermöglichen soll.

In DE 10 2005 061 031 A1 ist eine Wasserauslaufventilanordnung beschrieben, bei welcher einerseits eine übliche Handhebel-Mischventilkartusche mit Kalt- und Heisswasserzulauf vorhanden ist, aber andererseits in einer zusätzlichen Zulaufleitung (d.h. nicht im Kalt- oder Heisswasserzulauf zur Mischventilkartusche) ein Elektromagnetventil installiert ist, das durch einen im Handhebel der Mischventilkartusche (d.h. nicht in der eigentlichen Kartusche) integrierten elektrischen Druckschalter betätigbar ist, um beispielsweise in der Schliessstellung der Mischventilkartusche für kurze Zeit Wasser von der zusätzlichen Zulaufleitung aus dem Wasserauslauf strömen zu lassen. Nach wie vor wird aber bei dieser Wasserauslaufventilanordnung das Mischwasser im Normalbetrieb mit einer Handhebel-Mischventilkartusche eingestellt. Sowohl der elektrische Druckschalter als auch diese Mischventilkartusche führen aber zu plötzlichem Schliessen mit den oben erwähnten Nachteilen.

Die Aufgabe der vorliegenden Erfindung ist es, eine alternative Sanitärarmatur mit einer in ein Kartuschengehäuse der Sanitärarmatur eingebauten Steuerkartusche vorzuschlagen.

Diese Aufgabe wird gelöst, indem eine Sanitärarmatur mit einer Steuerkartusche mit den Merkmalen des Anspruchs 1 vorgeschlagen wird. Diese Steuerkartusche, eingebaut in ein Kartuschengehäuse der Sanitärarmatur, umfasst eine erste Zuführöffnung und eine Auslauföffnung sowie eine oder mehrere Dichtungen, die zum dichtenden Anliegen an eine Innenoberfläche des Kartuschengehäuses ausgebildet und so angeordnet sind, dass nach erfolgtem Einbau der Steuerkartusche in das Kartuschengehäuse der Sanitärarmatur die erste Zuführöffnung dichtend an einen Kaltwasser- oder Mischwasser-Anschluss der Sanitärarmatur und die Auslauföffnung dichtend an eine Auslaufleitung der Sanitärarmatur anschliesst.

Die erfindungsgemässe Sanitärarmatur mit der Steuerkartusche zeigt, dass die erste Zuführöffnung im Kartuschengehäuse oder in der Steuerkartusche direkt mit der gegenüber dem Kartuschengehäuse abgedichteten Auslauföffnung verbunden ist, und dass die Steuerkartusche eine zweite Zuführöffnung umfasst, in welcher eine elektrische Zuleitung angeordnet ist, die einen elektrischen Schalter der Steuerkartusche zumindest zum Einschalten und Abschalten eines Wasserflusses mit einem in einer am Kaltwasser- oder Mischwasser-Anschluss der Sanitärarmatur angeschlossenen Kaltwasser- oder Mischwasser-Zuleitung angeordneten Ventil verbindet, wobei der elektrische Schalter der Steuerkartusche ausgewählt ist aus einer Gruppe, die aus Dreh-Schaltern besteht, welche Drehgeber umfassen.

Vorzugsweise ist die zweite Zuführöffnung der Steuerkartusche ebenfalls gegenüber der Innenoberfläche des Kartuschengehäuses abgedichtet.

Die Aufgabe wird insbesondere gelöst, indem eine elektronische Sanitärarmatur vorgeschlagen wird, welche eine anspruchsgemässe Steuerkartusche umfasst. Bevorzugte Ausführungsformen sowie zusätzliche und erfinderische Merkmale der Sanitärarmatur ergeben sich aus den abhängigen Ansprüchen.
Vorteile der vorliegenden Erfindung umfassen:
- Die anspruchsgemässe Steuerkartusche kann in das Kartuschengehäuse von bestehenden Sanitärarmaturen eingesetzt werden, ohne dass an der Armatur oder am Kartuschengehäuse etwas verändert werden muss.
- Weil die Kartuschengehäuse vieler bekannter Sanitärarmaturen normiert sind, können diese Armaturen auf einfachste Weise durch das Einsetzen einer anspruchsgemässen Steuerkartusche zu elektronisch steuerbaren Sanitärarmaturen umgebaut werden.
- Die Bedienungselemente (Hebel etc.) der Sanitärarmaturen können weiterverwendet oder durch speziell ausgebildete Bedienungselemente ersetzt werden.
- Eine erfindungsgemässe, elektronische Sanitärarmatur kann zum Wassersparen beitragen, weil begrenzte Öffnungszeiten definiert werden können, sodass die elektronisch gesteuerte Sanitärarmatur nach einer bestimmten Öffnungszeit (z.B. bei zu langem Warmduschen oder beim Zähneputzen bei laufendem Wasser) eine Wasserentnahme automatisch einschränken oder gar unterbrechen kann.
- Eine erfindungsgemässe, elektronische Sanitärarmatur kann eine Verbrühschutzfunktion umfassen, indem eine Höchsttemperatur des bezogenen Wassers festgelegt werden kann.
- Eine erfindungsgemässe, elektronische Sanitärarmatur kann automatische Hygienespülungen durchführen, indem sporadisch (z.B. nach jeweils 12 bis 72 Stunden) die Leitungen durchgespült und damit allfällige Keime aus dem stehenden (d.h. stagnierenden) Wasser entfernt werden.
- Elektronisch gesteuerte Sanitärarmaturen mit einfachen Oberflächen, d.h. ohne vorstehende Bedienungshebel und dergleichen, bieten neue Designmöglichkeiten und können zudem einfacher und sicherer gereinigt werden.
- Elektronisch gesteuerte Sanitärarmaturen mit einfachen Oberflächen, d.h. ohne vorstehende Bedienungshebel und dergleichen, benötigen weniger Kraft zum Einstellen oder Verändern von Wasserfluss und/oder Wassertemperatur, was besonders von Personen mit beschränkter Feinmotorik geschätzt wird.
- Um bei bekannten Kartuschen die Wassertemperatur von kalt auf heiss zu stellen, muss der Bedienungshebel um 120 ° verstellt werden, dies kann Personen mit beschränkter Feinmotorik Schwierigkeiten bereiten. Elektronische Sanitärarmaturen können auf einfache Weise beliebig genau einstellbar konfiguriert werden.

Die anspruchsgemässe Steuerkartusche sowie elektronische Sanitärarmaturen mit derartigen Steuerkartuschen werden nun anhand von schematischen Zeichnungen näher erläutert. Diese Zeichnungen stellen lediglich beispielhafte Ausführungsformen der vorliegenden Erfindung dar und sollen deren Umfang nicht beschränken. Dabei zeigt:
- Fig. 1: einen vertikalen Teilschnitt durch eine als Einhebelmischer ausgebildete Sanitärarmatur mit einer eingesetzten Steuerkartusche;
- Fig. 2: ein Vertikalschema einer einfachen Sanitärarmatur mit einer eingesetzten Steuerkartusche zum Beziehen von Kalt- oder Mischwasser;
- Fig. 3: ein Vertikalschema einer verbesserten Sanitärarmatur mit einer eingesetzten Steuerkartusche zum Beziehen von Kalt-, Misch- oder Warmwasser.

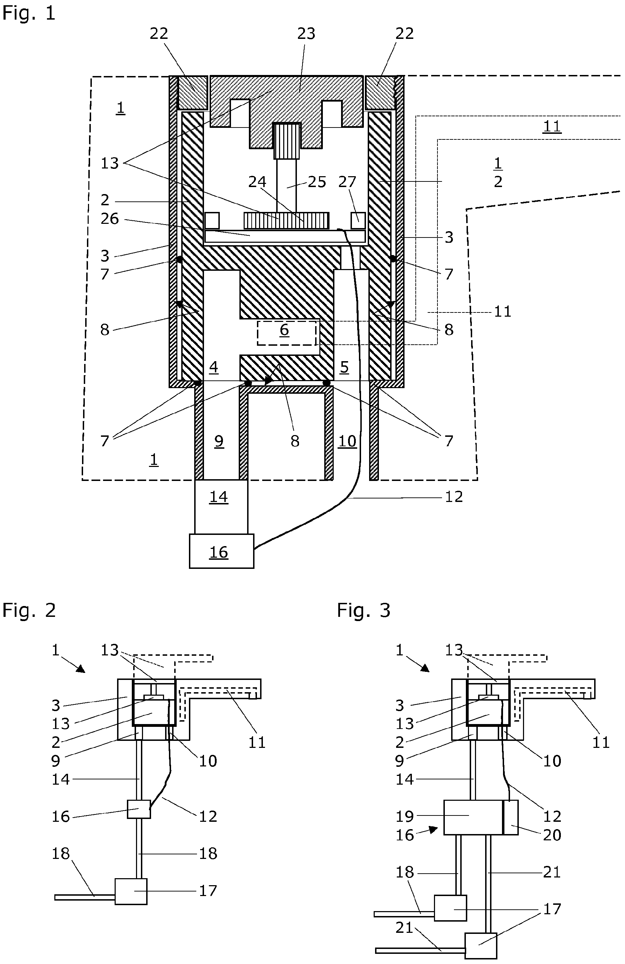

Die Figur 1 zeigt einen vertikalen Teilschnitt durch eine als Einhebelmischer ausgebildete Sanitärarmatur 1 mit einer eingesetzten Steuerkartusche 2. Diese Steuerkartusche 2 ist zum Einbau in ein Kartuschengehäuse 3 einer Sanitärarmatur 1 ausgebildet. Diese Steuerkartusche 2 umfasst eine erste Zuführöffnung 4 und eine Auslauföffnung 6 sowie eine oder mehrere Dichtungen 7. Diese Dichtungen 7 sind zum dichtenden Anliegen an eine Innenoberfläche 8 des Kartuschengehäuses 3 ausgebildet. Diese Dichtungen 7 sind zudem so angeordnet, dass nach erfolgtem Einbau der Steuerkartusche 2 in ein Kartuschengehäuse 3 einer Sanitärarmatur 1 die erste Zuführöffnung 4 dichtend an einen Kaltwasser- oder Mischwasser-Anschluss 9 der Sanitärarmatur 1 und die Auslauföffnung 6 dichtend an eine Auslaufleitung 11 der Sanitärarmatur 1 anschliesst.

Insbesondere in den USA ist es oft üblich, dass zur Wasserentnahme mit einer Sanitärarmatur 1 Warmwasser mit einer konstanten maximalen Temperatur von ca. 45 °C bereitgestellt wird. In solchen Fällen kann auf eine Mischeinheit 19 verzichtet und ein einfaches Ventil 16 (vgl. Fig. 2) eingesetzt werden. Aus diesem Grunde wird in der Folge und im Zusammenhang mit den einfachen Ausführungsformen der vorliegenden Erfindung von "Kaltwasser" oder "Mischwasser" gesprochen und nicht etwa von "Warmwasser". "Warmwasser" oder "Heisswasser" wird typischerweise bei höheren Temperaturen an eine Mischeinheit 19 geliefert, sodass der Sanitärarmatur 1 heisses Wasser oder (nach dem Mischen mit kaltem Wasser) Mischwasser entnommen werden kann. Entsprechend dieser Unterscheidung zwischen "Mischwasser" und "Warmwasser" wird das "Mischwasser" im Zusammenhang mit der vorliegenden Erfindung dem "Kaltwasser" gleichgesetzt.

Die Anzahl der Dichtungen 7 richtet sich nach der Anordnung der Zuführöffnung 4 und Auslauföffnung 6. Es sind im Wesentlichen zwei Varianten von Kartuschen aus dem Stand der Technik bekannt:
- Eine einzige, eher komplexe Dichtung 7 schliesst sämtliche Ein- und Ausgänge der Kartusche an zuführende und wegführende Leitungen an. In solchen Fällen befinden sich die Anschlüsse für alle zuführenden oder wegführenden Leitungen bevorzugt in einer einzigen Ebene der Innenoberfläche des Kartuschengehäuses (nicht gezeigt).
- Jeder einzelne Ein- und Ausgang der Kartusche wird mit einer einfachen Dichtung 7 (z.B. in Form eines O-Rings) individuell an den Anschluss einer zuführenden oder wegführenden Leitung angeschlossen. In solchen Fällen befinden sich üblicherweise die Anschlüsse für die zuführenden Leitungen in einer ersten Ebene und der Anschluss für die wegführende Leitung in einer zweiten Ebene der Innenoberfläche des Kartuschengehäuses (vgl. Fig. 1).

Entsprechend den bekannten Kartuschen aus dem Stand der Technik sind auch die Leitungsführung und die entsprechenden Dichtungen 7 bei den anspruchsgemässen Steuerkartuschen 2 angeordnet. Somit kann eine anspruchsgemässe Steuerkartusche 2 einfach den Platz einer Kartusche aus dem Stand der Technik einnehmen und die korrekte Weiterleitung des Wassers bei sicherer Abdichtung garantieren. Es kann damit vorgesehen sein, dass die zweite Zuführöffnung 5 der Steuerkartusche 2 gegenüber der Innenoberfläche 8 des Kartuschengehäuses 3 abgedichtet ist.

Bei der Verwendung der anspruchsgemässen Steuerkartusche 2 ist die erste Zuführöffnung 4 im Kartuschengehäuse 3 oder in der Steuerkartusche 2 direkt mit der gegenüber dem Kartuschengehäuse 3 abgedichteten Auslauföffnung 6 verbunden. Zudem umfasst die anspruchsgemässe Steuerkartusche 2 eine zweite Zuführöffnung 5, in welcher eine elektrische Zuleitung 12 angeordnet ist. Diese elektrische Zuleitung 12 verbindet einen elektrischen Schalter 13 der Steuerkartusche 2 zum Einschalten und Abschalten eines Wasserflusses mit einem in einer Kaltwasser- oder Mischwasser-Zuleitung 14 angeordneten Ventil 16. Eine derartige Sanitärarmatur 1 gemäss einer ersten einfacheren Ausführungsform mit eingebauter Steuerkartusche 2 ist in der Figur 2 abgebildet.

Die Figur 2 zeigt ein Vertikalschema einer einfachen Sanitärarmatur 1 gemäss einer ersten Ausführungsform mit einer Auslaufleitung 11 und mit einer eingesetzten Steuerkartusche 2 zum Beziehen von Kaltwasser oder Mischwasser. Die Kartusche 2 ist in das Kartuschengehäuse 3 eingesetzt. Am Kaltwasser- oder Mischwasser-Anschluss 9 der Sanitärarmatur 1 ist eine Kaltwasser- oder Mischwasser-Zuleitung 14 angeschlossen. Zwischen dieser Kaltwasser- oder Mischwasser-Zuleitung 14 und einer Kaltwasser- oder Mischwasser-Hausleitung 18 ist ein Ventil 16 eingebaut, das als Abschluss- und Dosier-Ventil und elektrisch ansteuerbar ausgebildet ist. Dieses Ventil 16 ist über eine elektrische Zuleitung 12 mit einem elektrischen Schalter 13 der eingesetzten Steuerkartusche 2 verbunden. Vorzugsweise wird eine einfache Sanitärarmatur 1 zum Bezug von Kaltwasser oder Mischwasser so ausgewählt, dass diese zudem einen Warmwasseranschluss 10 umfasst; so kann die elektrische Zuleitung 12 über den Warmwasseranschluss 10 der Sanitärarmatur 1 sowie durch die zweite Zuführöffnung 5 der Steuerkartusche 2 (vgl. Fig. 1) mit dem elektrischen Schalter 13 der eingesetzten Steuerkartusche 2 verbunden werden.

Die in Fig. 2 eingezeichnete Kaltwasser- oder Mischwasser-Hausleitung 18 umfasst vorzugsweise ein Eckventil 17, das zum Abschliessen der individuellen Kaltwasser- oder Mischwasser-Hausleitung 18 dient. Nach dem Verschliessen dieses Eckventils 17 kann das Ventil 16 einer bestimmten Sanitärarmatur 1 und auch diese ganze Sanitärarmatur 1 ausgebaut oder revidiert werden. Alternativ kann vorgesehen sein, dass für eine Gruppe oder mehrere Gruppen von Sanitärarmaturen 1 ein zentrales Absperrventil verbaut wird; dies ermöglicht das zentrale Abschliessen der Kaltwasser- oder Mischwasser-Hausleitung 18 für alle Sanitärarmaturen 1 einer solchen Gruppe. Nach dem Verschliessen dieses zentralen Absperrventils (nicht gezeigt) können alle nachfolgenden Installationen und Sanitärarmaturen 1 ausgebaut oder revidiert werden. Ein zentrales Absperrventil eignet sich insbesondere für das Absperren der Installationen zum Beziehen von Wasser wegen saisonalen Gründen (zum Beispiel zum Verhindern des Einfrierens der Wasserleitungen) oder im Notfall (zum Beispiel bei einem Unfall).

Die Figur 3 zeigt ein Vertikalschema einer verbesserten Sanitärarmatur 1 gemäss einer zweiten Ausführungsform mit einer eingesetzten Steuerkartusche 2 zum Beziehen von Kalt-, Misch- oder Warmwasser. Die Steuerkartusche 2 ist in das Kartuschengehäuse 3 der Sanitärarmatur 1 eingebaut. Dabei umfasst die Steuerkartusche 2 eine erste Zuführöffnung 4 und eine Auslauföffnung 6 sowie eine oder mehrere Dichtungen 7, die zum dichtenden Anliegen an eine Innenoberfläche 8 des Kartuschengehäuses 3 ausgebildet sind. Diese Dichtungen 7 sind zudem so angeordnet, dass nach erfolgtem Einbau der Steuerkartusche 2 in ein Kartuschengehäuse 3 einer Sanitärarmatur 1 die erste Zuführöffnung 4 dichtend an einen Kaltwasser- oder Mischwasser-Anschluss 9 der Sanitärarmatur 1 und die Auslauföffnung 6 dichtend an eine Auslaufleitung 11 der Sanitärarmatur 1 anschliesst (vgl. auch Fig. 1).

Erfindungsgemäss ist auch hier die erste Zuführöffnung 4 im Kartuschengehäuse 3 oder in der Steuerkartusche 2 direkt mit der gegenüber dem Kartuschengehäuse 3 abgedichteten Auslauföffnung 6 verbunden. Zudem umfasst die Steuerkartusche 2 eine zweite Zuführöffnung 5, in welcher eine elektrische Zuleitung 12 angeordnet ist, die einen elektrischen Schalter 13 der Steuerkartusche 2 zum Einschalten und Abschalten eines Wasserflusses mit einem in einer Kaltwasser- oder Mischwasser-Zuleitung 14 angeordneten Ventil 16 verbindet (vgl. auch Fig. 1).

Am Kaltwasser- oder Mischwasser-Anschluss 9 der Sanitärarmatur 1 ist eine Mischwasser-Zuleitung 14 angeschlossen. Das in der Mischwasser-Zuleitung 14 angeordnete Ventil 16 ist ein elektrisch ansteuerbares Mischventil, das an eine Kaltwasser-Hausleitung 18 und an eine Warmwasser-Hausleitung 21 angeschlossen ist. Dieses Ventil 16 ist über eine elektrische Zuleitung 12 mit einem elektrischen Schalter 13 der eingesetzten Steuerkartusche 2 verbunden. Das als Mischventil ausgebildete Ventil 16 umfasst eine Mischeinheit 19 mit einem Motor 20, wobei der elektrische Schalter 13 der Steuerkartusche 2 zum Ansteuern des Motors 20 und damit zum Verändern von Temperatur und/oder Fluss bei einer Wasserentnahme ausgebildet ist.

Vorzugsweise wird eine verbesserte Sanitärarmatur 1 zum Bezug von Kaltwasser, Warmwasser oder Mischwasser so ausgewählt, dass diese zudem einen Warmwasseranschluss 10 umfasst; so kann die elektrische Zuleitung 12 über den Warmwasseranschluss 10 der Sanitärarmatur 1 sowie durch die zweite Zuführöffnung 5 der Steuerkartusche 2 (vgl. Fig. 1) mit dem elektrischen Schalter 13 der eingesetzten Steuerkartusche 2 verbunden werden.

Die in Fig. 3 eingezeichneten Kaltwasser-Hausleitung 18 und Warmwasser-Hausleitung 21 umfassen vorzugsweise je ein Eckventil 17, das zum Abschliessen der individuellen Kaltwasser-Hausleitung 18 oder Warmwasser-Hausleitung 21 dient. Nach dem Verschliessen dieser Eckventile 17 für eine bestimmte Sanitärarmatur 1 kann das Ventil 16 für diese Sanitärarmatur 1 und auch diese ganze Sanitärarmatur 1 ausgebaut oder revidiert werden. Alternativ kann (wie oben beschrieben) vorgesehen sein, dass für eine Gruppe oder mehrere Gruppen von Sanitärarmaturen 1 zentrale Absperrventile (für Kaltwasser und Warmwasser vorzugsweise getrennt) verbaut werden; dies ermöglicht das zentrale Abschliessen der Kaltwasser-Hausleitung 18 und der Warmwasser-Hausleitung 21 für alle Sanitärarmaturen 1 einer solchen Gruppe.

Es wird bevorzugt, dass die anspruchsgemässen Steuerkartuschen 2 mit einer oder mehrerer Feststellschrauben 22 so im Kartuschengehäuse 3 festgehalten werden, dass die Dichtungen 7 dichtend an den entsprechenden Innenoberflächen 8 des Kartuschengehäuses 3 anliegen. Diese aus dem Stand der Technik bekannten Feststellschrauben 22 können für einen Betrachter sichtbar (vgl. Fig. 1) oder verdeckt eingebaut sein und fixieren die Steuerkartusche 2 so im Kartuschengehäuse 3, dass sie dort unbeweglich festsitzt.

Vorzugsweise ist eine zum Einbau einer Steuerkartusche 2 geeignete Sanitärarmatur 1 als Einhebelmischer ausgebildet. Einhebelmischer sind dafür bekannt, dass ein Heben und Senken des Hebels den Wasserfluss hebt oder senkt, und dass ein Schwenken des Hebels zum Verändern der Wassertemperatur verwendet wird.

Der elektrische Schalter 13 der Steuerkartusche 2 ist erfindungsgemäss ausgewählt aus einer Gruppe, die aus Dreh-Schaltern besteht, welche Drehgeber 24 umfassen.

Der elektrische Schalter 13, ausgebildet als Dreh-Schalter mit Drehgeber 24, kann eine bewegliche Abdeckung umfassen. Derartige Dreh-Schalter bzw. Drehgeber sind aus dem Stand der Technik bekannt (vgl. beispielweise EP 2 250 321 B1) und umfassen vorzugsweise auf dem Hall-Prinzip beruhende Drehgeber.

Ein Drehschalter mit einer beweglichen Abdeckung ist in der Figur 1 dargestellt. In diesem Fall umfasst der elektrische Schalter 13 ein von aussen sichtbares Drehteil 23, das z.B. als verchromtes Bauteil ausgebildet sein kann. Zudem umfasst dieser elektrische Schalter 13 einen Drehgeber 24, der über eine Achse 25 mit dem Drehteil 23 verbunden bzw. verbindbar ist. Der Drehgeber 24 sitzt auf einer elektronischen Schaltung bzw. auf einer gedruckten elektronischen Schaltung (PCB) 26, bzw. ist zumindest an diese elektronische Schaltung angenähert. Die gedruckte elektronische Schaltung bzw. das PCB 26 ist hier mit seiner Rückseite an der Steuerkartusche 2 befestigt; dadurch kann das Licht von beispielsweise zwei Leuchtdioden oder LEDs 27 von einem Benutzer wahrgenommen werden. Beispielsweise befindet sich eine Spalte zwischen der hier ringförmigen Feststellschraube 22 und dem Drehteil 23, die vom LED-Licht durchdrungen werden kann; als eine mögliche Alternative kann die hier ringförmige Feststellschraube 22 für das LED-Licht transparent ausgebildet sein. Das LED-Licht kann mit seiner Intensität und/oder Farbe den gewählten Wasserfluss und/oder die gewählte Wassertemperatur anzeigen. Ein Blinken der LEDs kann einen aktiven Modus der elektronischen Sanitärarmatur signalisieren; derartige Modi können einen Service-Modus (z.B. beim Reinigen der Sanitärobjekte, an welche die die elektronische Sanitärarmatur 1 angeschlossen ist) und/oder einen Hygiene-Modus (z.B. zum sporadischen Entfernen von stehendem (d.h. stagnierendem) Wasser) umfassen.

Derartige elektronische Sanitärarmaturen der ersten oder zweiten Ausführungsform werden bevorzugt an Waschtischen, Wandbecken, Badewannen, Bidets und Kücheneinrichtungen sowie in Duschen von privaten und öffentlichen Bauten eingesetzt. Auch auf Schiffen oder in Wohnwagen können erfindungsgemässe elektronische Sanitärarmaturen eingesetzt werden.

### Bezugszeichen:

- 1: Sanitärarmatur
- 2: Steuerkartusche
- 3: Kartuschengehäuse
- 4: erste Zuführöffnung
- 5: zweite Zuführöffnung
- 6: Auslauföffnung
- 7: Dichtung, Dichtungen
- 8: Innenoberfläche von 3
- 9: Kaltwasser- oder Mischwasser-Anschluss von 1
- 10: Warmwasser-Anschluss von 1
- 11: Auslaufleitung von 1
- 12: elektrische Zuleitung
- 13: elektrischer Schalter von 2
- 14: Kaltwasser- oder Mischwasser-Zuleitung
- 16: Ventil
- 17: Eckventil
- 18: Kaltwasser- oder Mischwasser-Hausleitung
- 19: Mischeinheit
- 20: Motor von 19
- 21: Warmwasser-Hausleitung
- 22: Feststellschraube(n)
- 23: Drehteil
- 24: Drehgeber
- 25: Achse von 24
- 26: elektronische Schaltung (PCB)
- 27: LED(s)

## Patentansprüche

1. Sanitärarmatur (1) mit einer in ein Kartuschengehäuse (3) der Sanitärarmatur (1) eingebauten Steuerkartusche (2), wobei die Steuerkartusche (2) eine erste Zuführöffnung (4) und eine Auslauföffnung (6) sowie eine oder mehrere Dichtungen (7) umfasst, die zum dichtenden Anliegen an eine Innenoberfläche (8) des Kartuschengehäuses (3) ausgebildet und so angeordnet sind, dass nach erfolgtem Einbau der Steuerkartusche (2) in das Kartuschengehäuse (3) der Sanitärarmatur (1) die erste Zuführöffnung (4) dichtend an einen Kaltwasser- oder Mischwasser-Anschluss (9) der Sanitärarmatur (1) und die Auslauföffnung (6) dichtend an eine Auslaufleitung (11) der Sanitärarmatur (1) anschliesst, wobei die erste Zuführöffnung (4) im Kartuschengehäuse (3) oder in der Steuerkartusche (2) direkt mit der gegenüber dem Kartuschengehäuse (3) abgedichteten Auslauföffnung (6) verbunden ist, wobei die Steuerkartusche (2) eine zweite Zuführöffnung (5) umfasst, in welcher eine elektrische Zuleitung (12) angeordnet ist, die einen elektrischen Schalter (13) der Steuerkartusche (2) zumindest zum Einschalten und Abschalten eines Wasserflusses mit einem in einer am Kaltwasser- oder Mischwasser-Anschluss (9) der Sanitärarmatur (1) angeschlossenen Kaltwasser- oder Mischwasser-Zuleitung (14) angeordneten Ventil (16) verbindet, **dadurch gekennzeichnet, dass** der elektrische Schalter (13) der Steuerkartusche (2) ausgewählt ist aus einer Gruppe, die aus Dreh-Schaltern besteht, welche Drehgeber (24) umfassen.

2. Sanitärarmatur (1) mit einer Steuerkartusche (2) gemäss Anspruch 1, **dadurch gekennzeichnet, dass** die zweite Zuführöffnung (5) der Steuerkartusche (2) gegenüber der Innenoberfläche (8) des Kartuschengehäuses (3) abgedichtet ist.

3. Sanitärarmatur (1) mit einer Steuerkartusche (2) gemäss Anspruch 1 oder 2, **dadurch gekennzeichnet, dass** das in der Kaltwasser- oder Mischwasser-Zuleitung (14) angeordnete Ventil (16) ein Dosierventil ist, das an eine Kaltwasser- oder Mischwasser-Hausleitung (18) angeschlossen ist.

4. Sanitärarmatur (1) mit einer Steuerkartusche (2) gemäss Anspruch 1 oder 2, **dadurch gekennzeichnet, dass** das in der Kaltwasser- oder Mischwasser-Zuleitung (14) angeordnete Ventil (16) ein Mischventil ist, das an eine Kaltwasser-Hausleitung (18) und an eine Warmwasser-Hausleitung (21) angeschlossen ist.

5. Sanitärarmatur (1) mit einer Steuerkartusche (2) gemäss einem der vorhergehenden Ansprüche, **dadurch gekennzeichnet, dass** die Sanitärarmatur (1) ein Einhebelmischer ist.

6. Sanitärarmatur (1) mit einer Steuerkartusche (2) gemäss Anspruch 4 oder 5, **dadurch gekennzeichnet, dass** das als Mischventil ausgebildete Ventil (16) eine Mischeinheit (19) mit einem Motor (20) umfasst, wobei der elektrische Schalter (13) der Steuerkartusche (2) zum Ansteuern des Motors (20) und damit zum Verändern von Temperatur und/oder Fluss bei einer Wasserentnahme ausgebildet ist.

7. Sanitärarmatur (1) mit einer Steuerkartusche (2) gemäss Anspruch 3, **dadurch gekennzeichnet, dass** die Kaltwasser- oder Mischwasser-Hausleitung (18) ein Eckventil (17) oder ein zentrales Absperrventil umfasst.

8. Sanitärarmatur (1) mit einer Steuerkartusche (2) gemäss Anspruch 4, **dadurch gekennzeichnet, dass** die Kaltwasser- Hausleitung (18) und die Warmwasser-Hausleitung (21) je ein Eckventil (17) oder ein gemeinsames zentrales, für Kaltwasser und Warmwasser vorzugsweise getrenntes, Absperrventil umfassen.

## Claims

1. Sanitary fitting (1) having a control cartridge (2) installed in a cartridge housing (3) of the sanitary fitting (1), wherein the control cartridge (2) comprises a first feed opening (4) and a discharge opening (6) as well as one or more seals (7) which are designed for sealing contact with an inner surface (8) of the cartridge housing (3) and arranged such that once the control cartridge (2) has been installed in the cartridge housing (3) of the sanitary fitting (1), the first feed opening (4) is connected in a sealing manner to a cold-water or mixed-water connection (9) of the sanitary fitting (1) and the discharge opening (6) is connected in a sealing manner to a discharge pipe (11) of the sanitary fitting (1), wherein the first feed opening (4) in the cartridge housing (3) or in the control cartridge (2) is directly connected to the discharge opening (6) sealed with respect to the cartridge housing (3), wherein the control cartridge (2) comprises a second feed opening (5) in which an electrical supply line (12) is arranged, which connects an electrical switch (13) of the control cartridge (2) at least for switching on and off a water flow with a valve (16) arranged in a cold-water or mixed-water feed line (14) connected to the cold-water or mixed-water connection (9) of the sanitary fitting (1), **characterized in that** the electrical switch (13) of the control cartridge (2) is selected from a group consisting of rotary switches comprising rotary encoders (24).

2. Sanitary fitting (1) having a control cartridge (2) according to claim 1, **characterized in that** the second feed opening (5) of the control cartridge (2) is sealed with respect to the inner surface (8) of the cartridge housing (3).

3. Sanitary fitting (1) having a control cartridge (2) according to claim 1 or 2, **characterized in that** the valve (16) arranged in the cold-water or mixed-water feed line (14) is a metering valve connected to a cold-water or mixed-water domestic line (18).

4. Sanitary fitting (1) having a control cartridge (2) according to claim 1 or 2, **characterized in that** the valve (16) arranged in the cold-water or mixed-water feed line (14) is a mixing valve which is connected to a cold-water domestic line (18) and to a hot-water domestic line (21).

5. Sanitary fitting (1) having a control cartridge (2) according to one of the preceding claims, **characterized in that** the sanitary fitting (1) is a single-lever mixer.

6. Sanitary fitting (1) having a control cartridge (2) according to claim 4 or 5, **characterized in that** the valve (16) designed as a mixing valve comprises a mixing unit (19) with a motor (20), wherein the electrical switch (13) of the control cartridge (2) is designed to control the motor (20) and thus to change the temperature and/or flow when water is withdrawn.

7. Sanitary fitting (1) having a control cartridge (2) according to claim 3, **characterized in that** the cold-water or mixed-water domestic line (18) comprises an angle valve (17) or a central shut-off valve.

8. Sanitary fitting (1) having a control cartridge (2) according to claim 4, **characterized in that** the cold-water domestic line (18) and the hot-water domestic line (21) each comprise an angle valve (17) or a common central shut-off valve, preferably separate for cold water and hot water.

## Revendications

1. Robinetterie sanitaire (1) avec une cartouche de commande (2) intégrée dans un boîtier de cartouche (3) de la robinetterie sanitaire (1), la cartouche de commande (2) comprenant une première ouverture d'alimentation (4) et une ouverture de sortie (6) ainsi qu'un ou plusieurs joints d'étanchéité (7) conçus pour venir reposer de façon étanche contre une surface intérieure (8) du boîtier de cartouche (3) et agencés de telle façon que, après le montage de la cartouche de commande (2) dans le boîtier de cartouche (3) de la robinetterie sanitaire (1), la première ouverture d'alimentation (4) est raccordée de manière étanche à un raccordement d'eau froide ou d'eau mixte (9) de la robinetterie sanitaire (1) et l'ouverture de sortie (6) est raccordée de façon étanche à une conduite d'évacuation (11) de la robinetterie sanitaire (1),
la première ouverture d'alimentation (4) dans le boîtier de cartouche (3) ou dans la cartouche de commande (2) étant raccordée directement à l'ouverture de sortie (6) rendue hermétique par rapport au boîtier de cartouche (3), la cartouche de commande (2) comprenant une deuxième ouverture d'alimentation (5) dans laquelle est agencée une alimentation électrique (12) qui raccorde un commutateur électrique (13) de la cartouche de commande (2) au moins pour activer et désactiver un débit d'eau à une soupape (16) agencée dans une conduite d'eau froide ou d'eau mixte (14) raccordée au raccordement d'eau froide ou d'eau mixte (9) de la robinetterie sanitaire (1),
**caractérisé en ce que** le commutateur électrique (13) de la cartouche de commande (2) est choisi parmi un groupe composé de commutateurs rotatifs qui comprennent des capteurs rotatifs (24).

2. Robinetterie sanitaire (1) avec une cartouche de commande (2) selon la revendication 1, **caractérisé en ce que** la deuxième ouverture d'alimentation (5) de la cartouche de commande (2) est étanche par rapport à la surface intérieure (8) du boîtier de cartouche (3).

3. Robinetterie sanitaire (1) avec une cartouche de commande (2) selon la revendication 1 ou 2, **caractérisé en ce que** la soupape (16) agencée dans la conduite d'eau froide ou d'eau mixte (14) est une vanne de dosage qui est raccordée à une canalisation domestique d'eau froide ou d'eau mixte (18).

4. Robinetterie sanitaire (1) avec une cartouche de commande (2) selon la revendication 1 ou 2, **caractérisé en ce que** la soupape (16) agencée dans la conduite d'eau froide ou d'eau mixte (14) est une vanne mélangeuse qui est raccordée à une canalisation domestique d'eau froide (18) et à une canalisation domestique d'eau chaude (21).

5. Robinetterie sanitaire (1) avec une cartouche de commande (2) selon l'une des revendications précédentes, **caractérisé en ce que** la robinetterie sanitaire (1) est un mitigeur à levier unique.

6. Robinetterie sanitaire (1) avec une cartouche de commande (2) selon la revendication 4 ou 5, **caractérisé en ce que** la soupape (16) réalisée sous la forme d'une vanne mélangeuse comprend une unité de mélange (19) avec un moteur (20), le commutateur électrique (13) de la cartouche de commande (2) étant conçu pour commander le moteur (20) et ainsi pour modifier la température et/ou le débit lors d'un prélèvement d'eau.

7. Robinetterie sanitaire (1) avec une cartouche de commande (2) selon la revendication 3, **caractérisé en ce que** la canalisation domestique d'eau froide ou d'eau mixte (18) comprend une vanne d'angle (17) ou une vanne d'arrêt centrale.

8. Robinetterie sanitaire (1) avec une cartouche de commande (2) selon la revendication 4, **caractérisé en ce que** la canalisation domestique d'eau froide (18) et la canalisation domestique d'eau chaude (21) comprennent chacune une vanne d'angle (17) ou une vanne d'arrêt centrale commune, de préférence une vanne d'arrêt séparée pour l'eau froide et l'eau chaude.
